# EUROPÄISCHE PATENTSCHRIFT

(11) **EP 3 482 431 B1**
(45) Veröffentlichungstag und Bekanntmachung des Hinweises auf die Patenterteilung: **04.03.2020**
(21) Anmeldenummer: 17733823.3
(22) Anmeldetag: 28.06.2017
(51) Int. Cl.: H01M 2/12, H01M 2/02, H01M 2/04

(54) **BATTERIEZELLE SOWIE VERFAHREN ZUM APPLIZIEREN EINES BERSTELEMENTS AN EINEM GEHÄUSETEIL EINER BATTERIEZELLE**
BATTERY CELL AND METHOD FOR APPLYING A RUPTURE ELEMENT TO A HOUSING PART OF A BATTERY CELL
ÉLÉMENT DE BATTERIE ET PROCÉDÉ POUR APPLIQUER UN ÉLÉMENT DE RUPTURE À UNE PARTIE DE BOÎTIER D'UN ÉLÉMENT DE BATTERIE

(30) Priorität: 08.07.2016 DE 102016212450
(43) Veröffentlichungstag der Anmeldung: 15.05.2019
(73) Patentinhaber: Bayerische Motoren Werke Aktiengesellschaft, 80809 München (DE)
(72) Erfinder: DAUB, Rüdiger, 82194 Gröbenzell (DE); HEROLD, Jürgen, 93437 Furth im Wald (DE); SINGER, Christian, 75217 Birkenfeld (DE); TSIOUVARAS, Nikolaos, 80798 München (DE); ZEILINGER, Tobias, 80801 München (DE)
(86) Internationale Anmeldenummer: PCT/EP2017/065934
(87) Internationale Veröffentlichungsnummer: WO 2018/007216

(56) Entgegenhaltungen:
- DE-A1-102010 013 027
- JP-A- H01 220 368
- JP-A- 2007 220 508
- US-A1- 2011 027 645
- DODIUK H ET AL: "Preadhesion Laser Treatment of Aluminum Surfaces", THE JOURNAL OF ADHE, TAYLOR & FRANCIS INC, US, Bd. 41, Nr. 1-4 Special, 1. Januar 1993 (1993-01-01), Seiten 93-112, XP008152302, ISSN: 0021-8464, DOI: 10.1080/00218469308026556 [gefunden am 2006-09-24]

## Beschreibung

Die vorliegende Erfindung betrifft eine Batteriezelle sowie ein Verfahren zum Applizieren eines Berstelements an einem Gehäuseteil einer Batteriezelle.

Hochvoltspeicher von Elektro- oder Hybridfahrzeugen bestehen üblicherweise aus mehreren elektrisch miteinander verschalteten Speichermodulen. Jedes der Speichermodule wiederum besteht üblicherweise aus mehreren elektrisch miteinander verschalteten Speicherzellen. Die einzelnen Speicherzellen weisen jeweils ein Gehäuse auf, welches z. B. eine Quaderform oder eine Zylinderform haben kann.

Während des Betriebs können sich die Speicherzellen beträchtlich erwärmen, was üblicherweise auch mit einem gewissen Druckanstieg im Inneren der Speicherzellen einhergeht. Wenngleich gewisse Druckanstiege im Inneren der Speicherzellen tolerierbar sind, kann es bei Fehlern in der Speicherzelle aufgrund darin ablaufender chemischer Reaktionen zu unzulässig hohen Druckanstiegen kommen. Bei Überschreiten eines vorgegebenen Drucks in den Speicherzellen muss sichergestellt sein, dass sich der Druck in "kontrollierter" bzw. "definierter Art und Weise" abbauen kann.

Bei auf dem Markt befindlichen Speicherzellen, wie sie z. B. in Hochvoltspeichern von Elektrofahrzeugen der Marke BMW verbaut sind, sind die Batteriezellengehäuse aus Aluminium hergestellt. In einem Deckel des Aluminiumgehäuses ist eine so genannte "Berstmembran" vorgesehen, die ebenfalls aus Aluminium bestehen kann. Derartige Berstmembranen sind üblicherweise vorgeprägt oder lasergraviert und mit einem aufwändigen Mikroschweißverfahren an dem Gehäuse der Batteriezelle bzw. am Deckel der Batteriezelle angeschweißt. "Vorgeprägt" bzw. "lasergraviert" bedeutet, dass die Berstmembran mit einer oder mehreren Schwächungslinien versehen ist, entlang derer die Berstmembran bei Überschreiten eines vorgegeben Drucks reißt und einen Druckabbau aus dem Inneren der Batteriezellen und in die Umgebung ermöglicht.

Derartige Berstmembranen sind üblicherweise von einer dem Zelleinneren der Batteriezelle zugewandten Seite her mit dem Batteriegehäuse bzw. dem Batteriedeckel verschweißt.

Die DE 102010013027 A1 betrifft eine Einzelzelle für eine Batterie, wobei in einem Gehäuse Elektrodenfolien unterschiedlicher Polarität angeordnet sind, wobei das Gehäuse an einer vorgebbaren Position eine Ausströmöffnung aufweist, die mittels einer Membran, die von außen an dem Gehäuse befestigt ist, verschlossen ist.

Die JP H01220368 A betrifft eine vor Explosion gesicherte Vorrichtung, wobei eine Dichtungsplatte ein Gasentlüftungsloch eines Ventilkörpers abdichtet.

Die JP 2007220508 A betrifft eine Batterie, die mit einem Batteriebehälter und mit einem in dem Behälter gelagerten Stromerzeugungselement ausgestattet ist. Am Batteriebehälter befindet sich eine Öffnung, welche mit einem Dichtungselement abgedichtet ist.

Die US 2011/027645 A1 betrifft ein Verfahren zum Bilden einer Zellenanordnung, indem ein Elektrodenkörper und ein Elektrolyt in einem externen Gehäuse mit einem Durchgangsloch angeordnet werden. Eine Siegelfolie wird mit dem externen Gehäuse verschweißt, um die Durchgangsbohrung vorübergehend abzudichten.

Dodiuk H et. al. "Preadhesion Laser Treatment of Aluminum Surfaces" im The Journal of Adhesion, June 1993, offenbaren einen Excimer-Laser, der zur Voradhäsionsbehandlung von Aluminiumlegierungen verwendet werden kann. Aufgabe der Erfindung ist es, ein Gehäuseteil einer Batteriezelle oder für eine Batteriezelle anzugeben, bei dem ein Berstelement in anderer, vorteilhafter Weise an einem Gehäuseteil der Batteriezelle fixiert ist, sowie ein entsprechendes Verfahren zum Applizieren eines Berstelements an einem Gehäuseteil einer Batteriezelle anzugeben.

Diese Aufgabe wird durch die Merkmale des Patentanspruches 1 bzw. 2 gelöst. Vorteilhafte Ausgestaltungen und Weiterbildungen der Erfindung sind den Unteransprüchen zu entnehmen.

Ausgangspunkt der Erfindung ist ein Gehäuseteil einer Batteriezelle oder für eine Batteriezelle. Bei dem Gehäuseteil kann es sich beispielsweise um einen Gehäusedeckel handeln. Unter dem Begriff "Gehäusedeckel" kann z.B. ein Teil des Gehäuses einer Batteriezelle verstanden werden, der, in Bezug auf die Schwerkraft, an einer Oberseite der Batteriezelle angeordnet ist bzw. bzw. der eine Oberseite oder einen Teil der Oberseite der Batteriezelle bildet.

Der nicht erfindungsgemäße Gehäuseteil besteht z.B. aus einem Metallwerkstoff, wie z. B. Aluminium oder einer Aluminiumlegierung.

Die Wandstärke des Gehäuseteils und/oder des Batteriezellengehäuses kann z. B. im Bereich zwischen 0,6 und 1mm liegen. Das Gehäuse der Batteriezelle kann z. B. eine zylindrische oder prismatische, insbesondere quaderartige Form haben.

Der o.g. Gehäuseteil weist eine einem Innern der Batteriezelle zugewandte Innenseite und eine einem Äußeren der Batteriezelle zugewandte Außenseite auf. In dem Gehäuseteil ist ein Loch vorgesehen, über das in einem Fehlerfall, in dem es im Inneren der Batteriezelle zu einem unzulässig hohen Druckanstieg kommt, Druck in die Umgebung entweichen kann.

Im Normalfall, d. h. wenn sich die Batteriezelle in einem einwandfreien Zustand befindet und der Druck im Inneren der Batteriezelle kleiner als ein vorgegebener zulässiger Höchstdruck ist, überdeckt das plättchenartige Berstelement das in dem Gehäuseteil vorgesehene Loch vollständig. Ein Randbereich des Berstelements ist im "Normalfall", d. h. wenn sich die Batteriezelle in einem einwandfreien Zustand befindet, umlaufend mit einem sich um das Loch herum erstreckenden Randbereich des Gehäuseteils verbunden, wodurch das Loch fluiddicht durch das Berstelement verschlossen ist.

Ein wesentliches Merkmal eines erfindungsgemäßen Gehäusesteiles einer Batteriezelle oder für eine Batteriezelle besteht darin, dass das plättchenartige Berstelement zumindest etwas größer als das Loch ist und von der Außenseite des Gehäuseteils her auf das Loch aufgebracht ist. Im Unterschied zu der eingangs erwähnten mit mindestens einer Materialschwächung versehenen Berstmembran ist bei der vorliegenden Erfindung vorgesehen, dass bei Überschreiten eines vorgegebenen Batteriezelleninnendrucks (Druck im Inneren der Batteriezelle) eine Verbindung zwischen dem Berstelement und dem Gehäuseteil versagt bzw. aufbricht oder aufreißt und das an der Außenseite des Gehäuseteils angeordnete, das in dem Gehäuseteil vorgesehene Loch überdeckende Berstelement sich teilweise oder vollständig von dem Gehäuseteil löst und einen Abbau eines im Inneren der Batteriezelle herrschenden Innendrucks in die Umgebung ermöglicht.

Wie oben bereits erwähnt kann das nicht erfindungsgemäße Gehäuseteil z.B. aus Metall sein, wobei das nicht erfindungsgemäße Berstelement z.B. aus einem Kunststoffmaterial bestehen kann. Erfindungsgemäß ist vorgesehen, dass das Gehäuseteil aus einem Kunststoffmaterial und das Berstelement aus Metall besteht.

Gegenstand der Erfindung ist nicht nur das oben beschriebene Gehäuseteil einer Batteriezelle oder für eine Batteriezelle, sondern auch ein Verfahren zum Applizieren eines Berstelements an einem solchen Gehäuseteil einer Batteriezelle, insbesondere an einem zum Verschließen einer Batteriezelle vorgesehenen Gehäuseteil, wie z. B. einem Gehäusedeckelelement einer Batteriezelle. Das nicht erfindungsgemäße Gehäuseteil kann aus einem

Metallwerkstoff, wie z. B. Aluminium oder einer Aluminiumlegierung, bestehen, und weist eine einem Innern der Batteriezelle zugewandte Innenseite und eine einem Äußeren der Batteriezelle zugewandte Außenseite auf. In dem Gehäuseteil ist ein Loch vorgesehen, über das in einem Fehlerfall, in dem es in der Batteriezelle zu einem unzulässig hohen Druckanstieg kommt, Druck in die Umgebung entweichen kann.

Ein Grundgedanke des erfindungsgemäßen Verfahrens besteht darin, dass ein plättchenartiges Berstelement bereitgestellt wird, welches zumindest etwas größer als das in dem Gehäuseteil vorgesehene Loch ist. Das plättchenartige Berstelement wird so von einer Außenseite her auf das Loch aufgebracht, dass es das Loch vollständig überdeckt. Ein Randbereich des plättchenartigen Berstelements wird umlaufend mit einem sich um das Loch herum erstreckenden Randbereich des Gehäuseteils verbunden, derart, dass das plättchenartige Berstelement das Loch fluiddicht, insbesondere gasdicht, verschließt. Fluiddicht bzw. gasdicht ist im Sinne von weitegehend fluiddicht bzw. weitgehend gasdicht zu verstehen, wobei eine Leckrate von bis zu 5^{∗}10⁻⁶ (mbar *l)/ s als gasdicht angesehen wird.

Nach einer Weiterbildung der Erfindung erfolgt das Verbinden des Randbereichs des plättchenartigen Berstelements mit dem um sich das Loch herum erstreckenden Randbereich des Gehäuseteils klebstofffrei, z. B. durch mechanische Adhäsion. Unter "mechanischer Adhäsion" wird eine (im Mikrometer- oder Nanometerbereich) formschlüssige Verankerung einer dem Gehäuseteil zugewandten Unterseite des plättchenartigen Berstelements mit einer dem Berstelement zugewandten Oberseite des Gehäuseteils verstanden. Ein Formschluss ergibt sich (im Mikrometer- oder Nanometerbereich) durch formschlüssiges Ineinandergreifen der Unterseite des Berstelements mit der Oberseite des Gehäuseteils im Bereich von Kapillaren, Poren bzw. Hinterschneidungen. Eine mechanische Verankerung des Berstelements an dem Gehäuseteil beruht auf einem Eindringen von Material des Berstelements in derartige Kapillaren, Poren bzw. Hinterschneidungen, wobei das Eindringen durch Fließen von Material des Berstelements während des Fügens des Berstelements erfolgt und das "geflossene Material" des Berstelements nach dem Fügen des Berstelements, d. h. nach dem es in Oberflächenstrukturen des Gehäuseteils, d. h. in Kapillaren oder Poren oder Hinterschneidungen des Gehäuseteils geflossen ist, (wieder-)erstarrt.

Nicht erfindungsgemäß wird ein aus einem Kunststoffmaterial, wie z. B. aus einem Polypropylenmaterial, bestehendes ein plättchenartiges Berstelement verwendet. Bei dem Berstelement und dem Gehäuseteil, an dem das Berstelement fixiert wird, kann es sich also um unterschiedliche Materialien, insbesondere um eine Materialkombination aus einem Metall (z.B. Aluminium oder Aluminiumlegierung aus dem bzw. der das Gehäuseteil besteht) und einem Nichtmetall, insbesondere einem Kunststoffmaterial, aus dem nicht erfindungsgemäß das Berstelement besteht, handeln. Wichtig ist, dass die für das Gehäuseteil und das Berstelement verwendeten Materialien eine geringe Wasserpermeabilität aufweisen. Als Materialien für das Gehäuseteil und das Berstelement kommen nicht erfindungsgemäß auch mehrschichtige Materialverbünde, wie z.B. ein Materialverbund mit den Schichten Polypropylen - Aluminium - Polypropylen in Betracht, z.B. in der Art einer Folie.

Um die für eine mechanische Adhäsion bzw. für eine formschlüssige Verbindung der Unterseite des Berstelements mit der Oberseite des Gehäuseteils erforderlichen Oberflächenstrukturen (z. B. Kapillaren, Poren, Hinterschneidungen o. ä.) im Mikrometer- bzw. Nanometerbereich zu erzeugen, kann vorgesehen sein, dass auf einer Außenseite des Gehäuseteils eine Oberfläche des sich um das Loch herum erstreckenden Randbereichs vor dem Aufbringen des Berstelements mittels eines Lasers bearbeitet und dadurch aufgeraut wird.

Wie oben bereits erwähnt, ist es erfindungsgemäß vorgesehen, dass das Gehäuseteil aus Kunststoff und die Berstmembran aus Metall ist. In diesem Fall ist das Berstelement, zumindest ein Randbereich des Berstelements analog der obigen Beschreibung aufzurauen, wobei beim dann beim Aufdrücken oder Aufpressen des Berstelements Kunststoffmaterial des Gehäuseteils zu fließen begänne und in Hinterschneidungsbereiche der Oberflächenstrukturen des Berstelements fließen würde. Alle in der Beschreibung erwähnten Verfahrensschritte können (für den Fall, dass das Gehäuseteil aus Kunststoff und die Berstmembran aus Metall ist) erfindungsgemäß also auch "umgekehrt" angewendet werden, d.h. die in der Beschreibung erwähnten Materialien des Gehäuseteils und des Berstelements sowie die betreffenden Verfahrensschritte sind erfindungsgemäß gegeneinander vertauscht. Durch das Laserbearbeiten bzw. Aufrauen werden (im Mikrometer- oder Nanometerbereich) die für eine formschlüssige Verbindung des Berstelements mit dem Gehäuseteil erforderlichen Oberflächenstrukturen hergestellt. Durch eine Laserbearbeitung lassen sich beispielsweise rillenartige Strukturen und/oder pilzkopfartige Strukturen erzeugen. Durch eine Laserbearbeitung des Randbereichs des Lochs lassen sich insbesondere Oxidverbindungen des Materials, aus dem das Gehäuseteil besteht (z.B. im Fall von Aluminium Aluminiumoxidstrukturen), herstellen. Versuche haben gezeigt, dass sich durch eine Laserbearbeitung Oxidstrukturen herstellen lassen, die hinsichtlich ihrer Form der Form von Pilzköpfen ähneln, wodurch sich eine Vielzahl von Hinterschnittbereichen herstellen lassen, die eine gute Fixierung eines Berstplättchens mit einer definierten Höchst- bzw. Bruchfestigkeit ermöglichen.

Alternativ zu einer Laserbearbeitung kann das Aufrauen auch durch andere geeignete Bearbeitungsverfahren erfolgen, wie z.B. durch Sandstrahlen.

Nach einer Weiterbildung der Erfindung wird der Randbereich des Lochs so bearbeitet, dass sich rillenartige und/oder pilzkopfartige Strukturen oder allgemein Oberflächenstrukturen bzw. Rauigkeiten ergeben, deren Abmessungen (z. B. Rautiefe bzw. Abstand einzelner Rauheitsberge) im Mikrometerbereich oder im Sub-Mikrometerbereich oder im Nanometerbereich liegen.

Wie bereits erwähnt, beginnt beim Fügen des Berstplättchens an der Unterseite des Berstplättchens Material des Berstplättchens zu fließen und dringt in Hinterschneidungsbereiche der durch die Laserbearbeitung hergestellten Oberflächenstrukturen (z. B. rillenartigen und/oder pilzkopfartigen Strukturen) ein, wodurch sich (im Mikrometer- oder Nanometerbereich) ein Formschluss zwischen dem Berstplättchen und dem Gehäuseteil ergibt.

Das Fügen des plättchenartigen Berstelements erfolgt durch Aufdrücken oder Aufpressen des Randbereichs des plättchenartigen Berstelements auf den Rand des in dem Gehäuseteil vorgesehenen Lochs.

Alternativ oder ergänzend zu dem Aufdrücken oder Aufpressen des Berstelements kann das Berstelement, insbesondere der Rand des Berstelements und/oder das Gehäuseteil, insbesondere der Randbereich des Lochs des Gehäuseteils, während des Aufdrückens oder Aufpressens erwärmt werden, z. B. auf eine Temperatur, die Bereich zwischen 70° C und 130° C, insbesondere im Bereich zwischen 80°C und 120°C liegt. Durch das Erwärmen wird ein Fließen des Materials des Berstplättchens in Hinterschneidungsbereiche der auf dem Gehäuseteil durch die Laserbearbeitung hergestellten Oberflächenstrukturen unterstützt.

Mit der Erfindung werden insbesondere folgende Vorteile erreicht:
- Im Vergleich zu den eingangs erwähnten auf- bzw. angeschweißten Aluminiumberstmembranen ergeben sich durch das erfindungsgemäße Verfahren Kostenvorteile.
- Ferner ergeben sich Vorteile hinsichtlich der Bauraumflexibilität. Der Rand des plättchenartigen Berstelements kann relativ nahe an einen Rand des Gehäuseteils heranreichen, selbst dann, wenn das Gehäuseteil in seinem Randbereich mit einem anderen Gehäuseteil der Batteriezelle verschweißt werden muss. Zwischen dem Rand des plättchenartigen Berstelements und einem Schweißbereich, in dem das Gehäuseteil mit einem anderen Gehäuseteil der Batteriezelle verschweißt wird, ist also nur ein vergleichsweise geringer Mindestabstand erforderlich.
- Ein weiterer wesentlicher Vorteil ist darin zu sehen, dass das Gehäuseteil (z. B. Gehäusedeckel) an dem das Berstelement befestigt wird, bereits mit einem anderen Gehäuseteil (z. B. Gehäusetopf) der Batteriezelle verschweißt werden kann und erst anschließend das Berstelement appliziert werden kann. Über das zunächst noch offene Loch des Gehäuseteils kann dann ein Elektrolyt in das Gehäuse der Batteriezelle eingefüllt werden. Nach dem Einfüllen des Elektrolyts durch das in dem Gehäuseteil vorgesehene Loch kann das Loch durch das oben beschriebene Applizieren des Berstelements fluiddicht verschlossen werden.

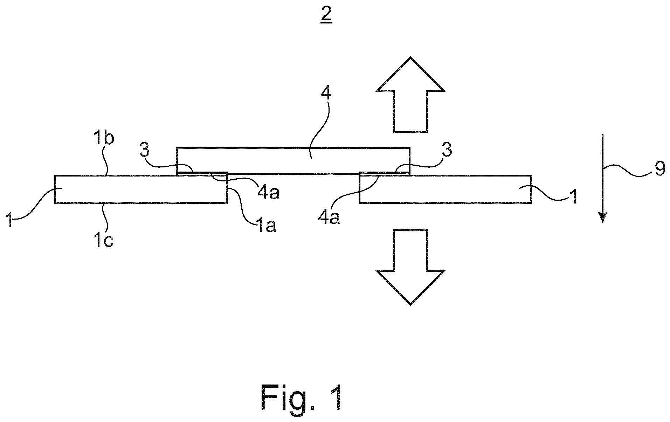

Im Folgenden wird die Erfindung im Zusammenhang mit der Zeichnung näher erläutert. Die einzige Figur 1 zeigt das Grundprinzip der Erfindung in stark schematisierter Darstellung.

Figur 1 zeigt ein Gehäuseteil 1 eines hier nicht näher dargestellten Batteriezellengehäuses. Bei dem Gehäuseteil 1 kann es sich beispielsweise um einen Gehäusedeckel handeln, der, in Bezug auf die Richtung g der Schwerkraft, ein hier nicht näher dargestelltes Batteriezellengehäuse von oben her verschließt. Das Gehäuseteil 1 kann nicht erfindungsgemäß z. B. aus Aluminium oder aus einer Aluminiumlegierung bestehen.

In dem Gehäuseteil 1 ist ein Durchgangsloch 1a vorgesehen, welches sich von einer Außenseite 1b des Gehäuseteils 1 zu einem Inneren der hier nicht näher dargestellten Batteriezelle zugewandten Innenseite 1c erstreckt. Das Durchgangsloch 1a ist dazu vorgesehen, in einem Fehlerfall, in dem es im Inneren der Batteriezelle zu einem unzulässig hohen Druckanstieg kommt, Druck bzw. Gas aus dem Inneren der Batteriezelle in die Umgebung 2 entweichen zu lassen. Das Durchgangsloch kann die Form eines Langlochs haben, was das Einfüllen einer Elektrolytflüssigkeit in das Innere der Batteriezelle erleichtert.

Das Durchgangsloch 1a des Gehäuseteils 1 weist einen umlaufenden Rand 3 auf, der sich um das Durchgangsloch 1a herum erstreckt. Dieser, einen Teil der Außenseite 1b des Gehäuseteils 1 bildende Rand 3 wird aufgeraut. Das Aufrauen des Randbereichs 3 kann z. B. durch Bestrahlen mit einem Laser erfolgen. Dadurch können gezielt Oberflächenstrukturen, wie z. B. Kapillaren, Poren o. ä., welche Hinterschneidungen aufweisen, hergestellt werden. Durch Bestrahlen mit einem hier nicht näher dargestellten Laser lassen sich in dem Randbereich 3 insbesondere rillenartige Strukturen erzeugen. Durch Bestrahlen mit einem Laser lassen sich ferner oxidartige Strukturen des Materials, aus dem das Gehäuseteil 1 besteht, erzeugen. Versuche haben gezeigt, dass sich dabei insbesondere pilzkopfartige Oxidstrukturen ausbilden lassen, welche zahlreiche Hinterschneidungen aufweisen.

Nach dem Aufrauen das Randbereichs 3 des Gehäuseteils 1 wird ein plättchenartiges Berstelement 4, welches nicht erfindungsgemäß aus einem Kunststoffmaterial wie z.

B. Polypropylen, bestehen kann, fluiddicht auf das Gehäuseteil 1 appliziert. Wie aus Figur 1 ersichtlich ist, ist das plättchenartige Berstelement 4 etwas größer als das Durchgangsloch 1a, d. h. das plättchenartige Berstelement 4 überdeckt das Durchgangsloch 1a vollständig. Durch Aufdrücken bzw. Aufpressen des plättchenartigen Berstelements 4 auf das Gehäuseteil 1 beginnt an einer Unterseite 4a des Berstelements 4 Material des Berstelements 4 zu fließen. Material des Berstelements 4 fließt dabei insbesondere in Hinterschnittbereiche, die zuvor während des Aufrauprozesses erzeugt wurden. Dadurch ergibt sich im Mikrometer- bzw. Nanometerbereich ein sehr guter Formschluss zwischen dem Berstelement 4 und der Oberseite 1b des Gehäuseteiles 1 im Randbereich 3 des Gehäuseteils 1.

Das Fließen des Materials des Berstelements 4 lässt sich unterstützen, wenn das Berstelement 4 zumindest in seinem Randbereich 4a und/oder das Gehäuseteil 1 zumindest in seinem Randbereich 3 während des Aufdrückens bzw. Aufpressens der Berstelements 4 erwärmt wird, z. B. auf eine Temperatur im Bereich zwischen 70°C und 130°C bzw. über eine Temperatur im Bereich zwischen 80°C und 120°C.

## Patentansprüche

1. Batteriezelle mit einem Gehäuseteil, wobei das Gehäuseteil (1)
- eine einem Innern der Batteriezelle zugewandte Innenseite (1c) und eine einem Äußeren (2) der Batteriezelle zugewandte Außenseite (1b) aufweist, wobei
- in dem Gehäuseteil (1) ein Loch (1a) vorgesehen ist, über das in einem Fehlerfall, in dem es im Inneren der Batteriezelle zu einem unzulässig hohen Druckanstieg kommt, Druck in die Umgebung entweichen kann, wobei
- ein plättchenartiges Berstelement (4) vorgesehen ist, welches das Loch (1a) vollständig überdeckt, wobei ein Randbereich (4a) des Berstelements (4) umlaufend mit einem sich um das Loch (1a) herum erstreckenden Randbereich (3) des Gehäuseteils (1) verbunden ist, wodurch das Loch (1a) fluiddicht verschlossen ist, wobei
- das plättchenartige Berstelement (4) zumindest etwas größer als das Loch (1a) ist und von der Außenseite (1b) her auf das Loch (1a) aufgebracht ist wobei vorgesehen ist,
- dass bei Überschreiten eines vorgegebenen Drucks im Inneren der Batteriezelle eine Verbindung zwischen dem Berstelement (4) und dem Gehäuseteil (1) versagt und das Berstelement (4) sich teilweise oder vollständig von dem Gehäuseteil (1) löst,
- das Gehäuseteil (1) aus einem Kunststoffmaterial und das plättchenartige Berstelement (4) aus einem Metall besteht.

2. Verfahren zum Applizieren eines Berstelements (4) an einem Gehäuseteil (1) einer Batteriezelle, insbesondere an einem zum Verschließen einer Batteriezelle vorgesehenen Gehäuseteil, mit folgenden Schritten:
Bereitstellen des Gehäuseteils (1), wobei das Gehäuseteil (1)
∘ eine einem Innern der Batteriezelle zugewandte Innenseite (1c) und eine einem Äußeren (2) der Batteriezelle zugewandte Außenseite (1b) aufweist und
∘ in dem Gehäuseteil (1) ein Loch (1a) vorgesehen ist, über das in einem Fehlerfall, in dem es in der Batteriezelle zu einem unzulässig hohen Druckanstieg kommt, Druck in die Umgebung entweichen kann, wobei
ein plättchenartiges Berstelement (4) bereitgestellt wird, welches zumindest etwas größer als das Loch (1a) ist, wobei das plättchenartige Berstelement (4)
- so von der Außenseite (1b) her auf das Loch (1a) aufgebracht wird, dass es das Loch (1a) vollständig überdeckt und
- einen Randbereich (4a) des plättchenartigen Berstelements (4) umlaufend mit einem sich um das Loch (1a) herum erstreckenden Randbereich (3) des Gehäuseteils (1) verbunden wird, derart, dass das plättchenartige Berstelement (4) das Loch (1a) fluiddicht verschließt und
- das Gehäusehäuseteil (1) aus einem Kunststoffmaterial und das plättchenartige Berstelement (4) aus einem Metall besteht.

3. Verfahren nach Anspruch 2, **dadurch gekennzeichnet, dass** das Verbinden des Randbereichs (3) des plättchenartigen Berstelements (4) mit dem sich um das Loch (1a) herum erstreckenden Randbereich (3) des Gehäuseteiles (1) klebstofffrei erfolgt.

4. Verfahren nach Anspruch 2 oder 3, **dadurch gekennzeichnet, dass** das Verbinden durch mechanische Adhäsion erfolgt.

5. Verfahren nach einem der Ansprüche 2 bis 4, **dadurch gekennzeichnet, dass** das Gehäuseteil (1) aus einem Polypropylenmaterial verwendet wird.

6. Verfahren nach einem der Ansprüche 2 bis 5, **dadurch gekennzeichnet, dass** das Berstelement (4) aus Aluminium oder aus einer Aluminiumlegierung besteht.

7. Verfahren nach einem der Ansprüche 2 bis 6, **dadurch gekennzeichnet, dass** eine Oberfläche des sich um das Loch (1a) herum erstreckenden Randbereichs des Berstelements (4) vor dem Anbringen an das Gehäuseteil (1) aufgeraut wird, insbesondere durch eine Laserbearbeitung.

8. Verfahren nach Anspruch 7, **dadurch gekennzeichnet, dass** durch das Bearbeiten mit einem Laser erfolgt und mit dem Laser in der Oberfläche des sich um das Loch (1a) herum erstreckenden Randbereichs des Berstelementes (4) Strukturen, insbesondere rillenartige Strukturen und/oder pilzkopfartige Strukturen, erzeugt werden.

9. Verfahren nach Anspruch 8, **dadurch gekennzeichnet, dass** die Strukturen Abmessungen aufweisen, die im Mikrometerbereich oder im Sub-Mikrometerbereich oder im Nanometerbereich liegen.

10. Verfahren nach einem der Ansprüche 8 oder 9, **dadurch gekennzeichnet, dass** die Strukturen zumindest teilweise mit Material des Gehäuseteils ausgefüllt sind.

11. Verfahren nach einem der Ansprüche 8 bis 10, **dadurch gekennzeichnet, dass** die Strukturen derart hergestellt werden, dass sich in den Strukturen Hinterschnittbereiche ergeben, so dass sich zwischen dem in die Hinterschnittbereiche der Strukturen eindringenden Material des Gehäuseteils (1) und dem Berstelement (4) Formschlüsse ergeben.

12. Verfahren nach einem der Ansprüche 8 bis 11, **dadurch gekennzeichnet, dass** die Strukturen, insbesondere die rillenartigen Strukturen und/oder pilzkopfartigen Strukturen teilweise oder überwiegend aus Oxiden des Werkstoffs des Gehäuseteils (1) gebildet sind, wobei die Oxide durch Bestrahlen mit einem Laser entstehen.

13. Verfahren nach einem der Ansprüche 2 bis 12, **dadurch gekennzeichnet, dass** das Berstelement (4) auf das Gehäuseteil (1) aufgedrückt oder aufgepresst wird, wobei das Berstelement (4) und/oder das Gehäuseteil (1) während des Aufdrückens oder Aufpressens erwärmt wird.

14. Verfahren nach Anspruch 13, **dadurch gekennzeichnet, dass** das Berstelement (4) und/oder das Gehäuseteil (1) während des Aufdrückens oder Aufpressens auf eine Temperatur erwärmt wird, die im Bereich zwischen 70°C und 130°C oder im Bereich zwischen 80°C und 120°C liegt.

## Claims

1. A battery cell with a housing part, wherein the housing part (1)
- has an inner side (1c) facing an interior of the battery cell and an outer side (1b) facing an exterior (2) of the battery cell, wherein
- a hole (1a) is provided in the housing part (1), via which hole in the event of a malfunction in which an impermissibly high pressure increase occurs in the interior of the battery cell, pressure can escape into the surrounding area, wherein
- a small-plate-like rupture element (4) is provided which completely overlaps the hole (1a), wherein an edge region (4a) of the rupture element (4) is connected all around to an edge region (3) of the housing part (1) which extends around the hole (1a), as a result of which the hole (1a) is closed off in fluid-tight manner, wherein
- the small-plate-like rupture element (4) is at least somewhat larger than the hole (1a) and is applied from the outer side (1b) onto the hole (1a), wherein provision is made
- that when a specified pressure in the interior of the battery cell is exceeded a connection between the rupture element (4) and the housing part (1) fails and the rupture element (4) becomes partially or completely detached from the housing part (1),
- the housing part (1) comprises a plastics material and the small-plate-like rupture element (4) of a metal.

2. A method for applying a rupture element (4) to a housing part (1) of a battery cell, especially to a housing part provided for closing off a battery cell, having the following steps:
providing the housing part (1), wherein the housing part (1)
∘ has an inner side (1c) facing an interior of the battery cell and an outer side (1b) facing an exterior (2) of the battery cell, and
∘ a hole (1a) is provided in the housing part (1), via which hole in the event of a malfunction in which an impermissibly high pressure increase occurs in the battery cell, pressure can escape into the surrounding area, wherein
a small-plate-like rupture element (4) is provided which is at least somewhat larger than the hole (1a), wherein the small-plate-like rupture element (4)
- is applied from the outer side (1b) to the hole (1a) such that it completely covers the hole (1a), and
- an edge region (4a) of the small-plate-like rupture element (4) is connected all around to an edge region (3) of the housing part (1) which extends around the hole (1a), such that the small-plate-like rupture element (4) closes off the hole (1a) in fluid-tight manner, and
- the housing part (1) comprises a plastics material and the small-plate-like rupture element (4) of a metal.

3. A method according to Claim 2, **characterised in that** the connection of the edge region (3) of the small-plate-like rupture element (4) to the edge region (3) of the housing part (1) which extends around the hole (1a) takes place without adhesive.

4. A method according to Claim 2 or Claim 3, **characterised in that** the connection takes place by mechanical adhesion.

5. A method according to one of Claims 2 to 4, **characterised in that** the housing part (1) made of a polypropylene material is used [sic].

6. A method according to one of Claims 2 to 5, **characterised in that** the rupture element (4) comprises aluminium or an aluminium alloy.

7. A method according to one of Claims 2 to 6, **characterised in that** a surface of the edge region of the rupture element (4) which extends around the hole (1a) is roughened prior to the attachment to the housing part (1), especially by laser machining.

8. A method according to Claim 7, **characterised in that** due to the machining takes place with a laser and structures, especially groove-like structures and/or mushroom-head-like structures, are produced with the laser in the surface of the edge region of the rupture element (4) which extends around the hole (1a).

9. A method according to Claim 8, **characterised in that** the structures have dimensions which lie in the micrometre range or in the sub-micrometre range or in the nanometre range.

10. A method according to one of Claims 8 or 9, **characterised in that** the structures are filled at least in part with material of the housing part.

11. A method according to one of Claims 8 to 10, **characterised in that** the structures are produced such that undercut regions are yielded in the structures, so that positive locking is produced between the material of the housing part (1) which penetrates into the undercut regions of the structures and the rupture element (4).

12. A method according to one of Claims 8 to 11, **characterised in that** the structures, especially the groove-like structures and/or mushroom-head-like structures, are formed partially or predominantly from oxides of the material of the housing part (1), wherein the oxides are produced by irradiation using a laser.

13. A method according to one of Claims 2 to 12, **characterised in that** the rupture element (4) is pushed or pressed onto the housing part (1), with the rupture element (4) and/or the housing part (1) being heated during the pushing-on or pressing-on.

14. A method according to Claim 13, **characterised in that** the rupture element (4) and/or the housing part (1) during the pushing-on or pressing-on is/are heated to a temperature which lies in the range between 70°C and 130°C or in the range between 80°C and 120°C.

## Revendications

1. Cellule de batterie ayant une partie de boîtier, cette partie de boîtier (1),
- ayant un côté interne (1c) tourné vers l'intérieur de la cellule de batterie et un côté externe (1b) tourné vers l'extérieur (2) de la cellule de batterie,
- dans la partie de boîtier (1) étant prévu un perçage (1a) par l'intermédiaire duquel, en présence d'un défaut selon lequel il apparaît à la partie interne de la cellule de batterie une montée en pression importante non admissible, la pression peut s'échapper dans l'environnement,
- un élément de rupture en forme de plaquette (4) qui recouvre totalement le perçage (1a), étant prévu la zone de bord (4a) de l'élément de rupture (4) étant reliée sur la totalité de sa périphérie avec la zone de bord (3) de la partie de boîtier (1) s'étendant autour du perçage (1a) de sorte que le perçage (1a) soit fermé de façon étanche aux fluides,
- l'élément de rupture en forme de plaquette (4) étant au moins essentiellement plus grand que le perçage (1a), et installé sur le perçage (1a) à partir du côté externe (1b),
dans laquelle
- en cas de dépassement d'une pression prédéfinie à la partie interne de la cellule de batterie, la liaison entre l'élément de rupture (4) et la partie de boîtier (1) est défaillante et l'élément de rupture (4) se sépare partiellement ou totalement de la partie de boîtier (1),
- la partie de boîtier (1) est réalisée en un matériau synthétique et l'élément de rupture en forme de plaquette (4) est réalisée en un métal.

2. Procédé permettant d'appliquer un élément de rupture (4) sur une partie de boîtier (1) d'une cellule de batterie, en particulier sur une partie de boîtier destinée à fermer une cellule de batterie comprenant les étapes suivantes consistant à :
- se procurer la partie de boîtier (1), cette partie de boîtier (1),
∘ ayant un côté interne tourné vers l'intérieur de la cellule de batterie (1c) et un côté externe (1b) situé vers l'extérieur (2) de la cellule de batterie,
∘ dans la partie de boîtier (1) étant prévu un perçage (1a) par l'intermédiaire duquel, en présence d'un défaut selon lequel il apparaît dans la cellule de batterie une forte montée en pression inadmissible, de la pression peut s'échapper dans l'environnement,
se procurer un élément de rupture (4) en forme de plaquette qui est au moins essentiellement plus grand que le perçage (1a), cet élément de rupture en forme de plaquette (4) :
- étant installé à partir du côté externe (1b) sur le perçage (1a) de sorte que ce perçage (1a) soit totalement recouvert, et
- la zone de bord (4a) de l'élément de rupture en forme de plaquette (4) étant reliée sur la totalité de sa périphérie avec la zone de bord (3) de la partie de boîtier (1) s'étendant autour du perçage (1a) de sorte que l'élément de rupture par éclatement en forme de plaquette (4) ferme le perçage (1a) de façon étanche aux fluides, et
- la partie de boîtier (1) étant réalisée en un matériau synthétique et l'élément de rupture (4) en forme de plaquette étant réalisé en un métal.

3. Procédé conforme à la revendication 2,
**caractérisé en ce que**
la liaison de la zone de bord (3) de l'élément de rupture (4) en forme de plaquette avec la zone de bord (3) de la partie de boîtier (1) s'étendant autour du perçage (1a) est effectuée sans adhésif.

4. Procédé conforme à la revendication 2 ou 3,
**caractérisée en ce que**
la liaison est effectuée par adhésion mécanique.

5. Procédé conforme à l'une des revendications 2 à 4,
**caractérisé en ce que**
la partie de boîtier (1) est réalisée en un polypropylène.

6. Procédé conforme à l'une des revendications 2 à 5,
**caractérisé en ce que**
l'élément de rupture (4) est réalisé en aluminium ou en un alliage d'aluminium.

7. Procédé conforme à l'une des revendications 2 à 6,
**caractérisé en ce que**
la surface de la zone de bord de l'élément de rupture (4) s'étendant autour du perçage (1a) est rendue rugueuse avant son installation sur la partie de boîtier (1) en particulier par un traitement au laser.

8. Procédé conforme à la revendication 7,
**caractérisé en ce que**
le traitement est effectué à l'aide d'un laser, et le laser permet l'obtention, dans la zone de bord de l'élément de rupture (4) s'étendant autour du perçage (1a) des structures, en particulier des structures en forme de rainures et/ou des structures en forme de tête de champignon.

9. Procédé conforme à la revendication 8,
**caractérisé en ce que**
les structures ont des dimensions qui sont situées dans la plage micrométrique, ou dans la plage sous-micrométrique ou dans la plage nanométrique.

10. Procédé conforme à l'une des revendications 8 et 9,
**caractérisé en ce que**
les structures sont au moins partiellement remplies avec le matériau de la partie de boîtier.

11. Procédé conforme à l'une des revendications 8 à 10,
**caractérisé en ce que**
les structures sont réalisées pour obtenir dans celles-ci des zones en contredépouille de façon qu'entre le matériau pénétrant dans les contre-dépouilles des structures de la partie de boîtier (1) et l'élément de rupture (4) on obtienne des liaisons par la forme.

12. Procédé conforme à l'une des revendications 8 à 11,
**caractérisé en ce que**
les structures, en particulier les structures en forme de rainures ou les structures en forme de têtes de champignon sont formées partiellement ou principalement d'oxydes du matériau de la partie de boîtier (1), ces oxydes se formant par irradiation avec un laser.

13. Procédé conforme à l'une des revendications 2 à 12,
**caractérisé en ce que**
l'élément de rupture (4) est comprimé ou appuyé sur la partie de boîtier (1), l'élément de rupture (4) et/ou la partie de boîtier (1) étant chauffé(s) pendant la compression ou l'appui.

14. Procédé conforme à la revendication 13,
**caractérisé en ce que**
l'élément de rupture (4) et/ou la partie de boîtier (1) est(sont) chauffé(es) pendant la compression ou l'appui à une température qui est située dans la plage comprise entre 70°C et 130°C ou dans la plage comprise entre 80°C et 120°C.
